# EUROPÄISCHE PATENTANMELDUNG

(11) **EP 2 889 714 A1**
(43) Veröffentlichungstag der Anmeldung: **01.07.2015**
(21) Anmeldenummer: 14195461.0
(22) Anmeldetag: 28.11.2014
(51) Int. Cl.: G05D 23/19

(54) **Verfahren zur Raumtemperaturregelung und Raumtemperaturregeleinheit**

(30) Priorität: 27.12.2013 DE 102013227178
(71) Anmelder: ROBERT BOSCH GMBH, 70442 Stuttgart (DE)
(72) Erfinder: Verdaasdonk, Bart, 7554 MA Hengelo (NL); Boesveld, Willem, 7396 PG De Vecht (NL)

(57) **Zusammenfassung**

Die Erfindung betrifft ein Verfahren zur Raumtemperaturregelung und eine Raumtemperaturregeleinheit mit einem Steuerungsmodul zur Regelung mindestens einer Raumtemperatur.

Für eine selbstständige Anpassung der Raumtemperatur erlernt das Steuerungsmodul einen zeitabhängigen Verlauf der Raumsolltemperaturwerte anhand zugeführter Raumsolltemperaturwerte und legt diesen der weiteren Regelung zugrunde, wobei der Verlauf durch neu zugeführte Raumsolltemperaturwerte aktualisiert wird.

## Beschreibung

Der Gegenstand der Erfindung betrifft ein Verfahren zur Raumtemperaturregelung nach dem Oberbegriff des Patentanspruchs 1 sowie eine Raumtemperaturregeleinheit nach dem Oberbegriff des Patentanspruchs 10.

### Stand der Technik

Üblicherweise wird die Raumtemperatur eines Raumes manuell durch einen Benutzer auf den gewünschten Raumtemperatursollwert eingestellt. Zusätzlich gibt es Raumtemperaturregeleinheiten, die eine Zuordnung von gespeicherten Raumtemperatursollwerten zu bestimmten Uhrzeiten erlauben, wobei diese Raumtemperatursollwerte vom Benutzer eingegeben werden müssen. Damit ist es beispielsweise möglich, einen zeitabhängigen Verlauf der Raumsolltemperaturwerte für die einzelnen Tage einer Woche fest vorzugeben.

Es hat sich allerdings herausgestellt, dass diese zeitbasierte Vorgabe von Raumtemperatursollwerten durch den Benutzer kaum genutzt wird. Häufig erfolgt eine derartige Eingabe nur einmalig bei Neuinstallation und wird dann nicht an ein möglicherweise geändertes Benutzerverhalten angepasst. Darüber hinaus möchten sich viele Benutzer auch nur ungern auf bestimmte Zeiten festlegen oder sie sind sich ihres eigenen Benutzerverhaltens nicht genau bewusst.

Ein weiteres Problem entsteht dadurch, dass beispielsweise durch den Wechsel der Jahreszeiten, aber auch durch Umstellung zwischen Sommer- und Winterzeit, Änderungen im Benutzerverhalten erfolgen, die in der Regel nicht von der Raumtemperaturregeleinheit berücksichtigt werden, da diese nicht entsprechend aktualisiert wird.

Häufig erfolgt dann eine Raumtemperaturregelung auf eine hinterlegte Raumsolltemperatur, die nicht einer gewünschten Raumsolltemperatur entspricht, sondern nur dem hinterlegten Raumsolltemperaturwert. Beispielsweise ist dann der Raum nicht ausreichend erwärmt, wenn vielleicht aufgrund eines Arbeitsplatzwechsels der Benutzer eher nach Hause kommt. Andererseits erfolgt eine unnötige Erwärmung, wenn der Benutzer sich aufgrund einer Änderung der Lebensumstände, z.B. aufgrund eines neuen Hobbies, häufiger außerhalb seiner Räumlichkeiten befindet. Diese werden dann unnötig warmgehalten, wodurch unnötigerweise Energie verbraucht wird.

Es ist nun eine Aufgabe der Erfindung, die Nachteile des Standes der Technik zu beheben, die insbesondere bei der rein manuellen Vorgabe von Raumsolltemperaturwerten und der Verwendung von fest hinterlegten, zeitgesteuerten Raumsolltemperaturwerten auftreten.

### Offenbarung der Erfindung

Erfindungsgemäß wird diese Aufgabe durch ein Verfahren gemäß Anspruch 1 sowie eine Raumtemperaturregeleinheit mit den Merkmalen des Anspruchs 10 gelöst. Vorteilhafte Ausgestaltungen finden sich in den Unteransprüchen.

Bei einem Verfahren zur Raumtemperaturregelung mit einem Steuerungsmodul zur Regelung mindestens einer Raumtemperatur ist erfindungsgemäß vorgesehen, dass das Steuerungsmodul einen zeitabhängigen Verlauf der Raumsolltemperaturwerte anhand zugeführter Raumsolltemperaturwerte erlernt und der weiteren Regelung zugrunde legt, wobei der Verlauf durch neu zugeführte Raumsolltemperaturwerte aktualisiert wird.

Durch dieses Verfahren erfolgt eine ständige dynamische Anpassung der Raumsolltemperaturwerte anhand des Benutzerverhaltens. Die Raumsolltemperaturwerte können dann durch unterschiedlichste Quellen zugeführt werden, beispielsweise durch manuelle Eingabe oder durch externe Zuführung der Raumtemperatursollwerte, beispielsweise über ein mobiles Gerät wie ein Telefon. Es handelt sich dabei um einen selbstlernenden Algorithmus, der aus den vom Nutzer zugeführten Raumsolltemperaturwerten ein Muster ableitet und daraus einen Verlauf an Raumsolltemperaturwerten ermittelt, sodass immer die bestmögliche Raumtemperatur erreicht wird. Änderungen der Umstände wie dem Benutzerverhalten führen dann zu einer zunächst nur manuellen Änderung der Raumsolltemperaturwerte, auf deren Grundlage das Steuerungsmodul den Verlauf der Raumsolltemperaturwerte anpasst. Das Steuerungsmodul lernt damit ständig vom Benutzer, zu welchem Zeitpunkt welche Raumsolltemperatur gewünscht wird. Damit erfolgt eine sehr effiziente Erwärmung bei gleichzeitig hohem Komfort. Darüber hinaus erfolgt eine automatische Anpassung an Änderungen der Umstände.

In einer besonders einfachen Ausgestaltung umfasst das Steuerungsmodul einen Schreib-Lese-Datenspeicher (RAM) mit Speicherstellen für Raumsolltemperaturwerte für zum Beispiel jede 10 Minuten eines Wochentages, deren gespeicherte Werte bei Zuführung neuer Einzelwerte an der entsprechenden Speicherstelle mit dem neuen Wert überschrieben werden.

In einer bevorzugten Weiterbildung werden die Raumsolltemperaturen bei der Erlernung des Verlaufs gefiltert und/oder gewichtet. Aus einer Anzahl zugeführter Raumsolltemperaturwerte kann ein Verlauf ermittelt und gespeichert werden, wobei fehlende Zwischenwerte gegebenenfalls interpoliert werden. Beispielsweise können länger zurückliegende Raumsolltemperaturwerte, also insbesondere länger zurückliegende Vorgaben für den gleichen Wochentag und die gleiche Uhrzeit, geringer gewichtet werden, einmalige Änderungen vernachlässigt werden und/oder häufig eingegebene Raumsolltemperaturwerte stärker berücksichtigt werden. Damit ergibt sich eine relativ schnelle Anpassung an das Benutzerverhalten, ohne dass einmalige Änderungen, wie beispielsweise ein abendlicher Besuch, den Verlauf der Raumsolltemperaturwerte zu stark beeinflussen würde.

Einzelne Raumsolltemperaturwerte können gegebenenfalls schon bei Zuführung besonders gekennzeichnet und so von einer Beeinflussung des berechneten Verlaufs ausgenommen werden.

Vorzugsweise werden im Verlauf die Raumsolltemperaturwerte in Abständen zwischen 5 und 30 Minuten, insbesondere zwischen 10 und 15 Minuten hinterlegt. Diese hinterlegten Raumsolltemperaturwerte werden dabei rechnerisch aus den zugeführten Raumsolltemperaturwerten ermittelt, wobei für Zeiten, zu denen keine Raumsolltemperaturwerte zugeführt wurden, Raumsolltemperaturwerte mittels Interpolation erstellt werden. Damit ergibt sich eine relativ hohe Auflösung durch die Hinterlegung vieler Raumsolltemperaturwerte. Beispielsweise werden bei einer Auflösung von 10 Minuten, 144 Raumsolltemperaturwerte pro Tag hinterlegt. Es ergibt sich dabei eine sehr feinfühlige Regelung, die gut an das Benutzerverhalten anpassbar ist.

Vorzugsweise kann das Steuerungsmodul die Raumtemperatur in einem Ausweichmodus zeitabhängig anhand hinterlegter Raumsolltemperaturwerte regeln. Dies entspricht der bekannten zeitabhängigen Steuerung. Der Verlauf der Raumsolltemperaturwerte entspricht dann festen Vorgaben. Gegebenenfalls können aber manuelle Einstellungen, die während des Ausweichmodus vorgenommen werden, dennoch für das Erlernen des Verlaufs berücksichtigt werden. Der Ausweichmodus kann beispielsweise von einem Benutzer manuell ausgewählt werden, wenn er eine automatische Raumtemperaturregelung auf Grundlage des selbstlernenden Verlaufs nicht nutzen möchte. Die Raumtemperatur wird dann in herkömmlicher Weise gesteuert. Der Benutzer kann aber jederzeit den Ausweichmodus verlassen, so dass wieder eine dynamische Anpassung an das Benutzerverhalten erfolgt.

Insbesondere für eine Neuinbetriebnahme ist es dabei vorteilhaft, wenn die für den Ausweichmodus beispielsweise herstellerseitig hinterlegten Raumsolltemperaturwerte bei der Berechnung des Verlaufs berücksichtigt werden. Dadurch ist es relativ schnell möglich, einen vollständigen Verlauf an Raumsolltemperaturwerten zu generieren. Gegebenenfalls kann diesen Werten auch eine besondere Gewichtung zugemessen werden.

Vorzugsweise wird der Verlauf der Raumsolltemperatur für einzelne Wochentage bestimmt und gespeichert. Häufig ist das Benutzerverhalten an gleichen Wochentagen jeweils gleich bzw. sehr ähnlich. Beispielsweise werden viele Hobbies ein- oder zweimal die Woche am gleichen Wochentag durchgeführt, während am Wochenende in der Regel später aufgestanden wird. Durch eine entsprechende Hinterlegung jeweils eines Verlaufes pro Wochentag, lässt sich einem vom Wochentag abhängigen Benutzerverhalten Rechnung tragen.

Dabei ist besonders bevorzugt, dass ein wiederkehrendes Muster jeweils für ein oder mehrere Wochen, insbesondere für zwei oder drei Wochen erstellt wird. Dadurch kann Umständen Rechnung getragen werden, die sich nicht wochenweise wiederholen, sondern beispielsweise nur alle zwei Wochen oder über noch längere Zeiträume. Beispielsweise tritt dies bei wechselnden Arbeitsschichten auf.

Vorzugsweise umfasst das Steuerungsmodul einen Ferienmodus, für den insbesondere separate Raumsolltemperaturwerte hinterlegt sind, wobei im Ferienmodus zugeführte Raumsolltemperaturwerte den berechneten Verlauf nicht beeinflussen. Der Ferienmodus kann dabei insbesondere manuell eingestellt werden. Um jedoch auch nach Ende des Ferienmodus den gewünschten Komfort durch die Raumtemperaturregelung zu erhalten, werden die während des Ferienmodus verwendeten Raumsolltemperaturwerte bei der Berechnung des Verlaufs nicht berücksichtigt.

Dabei ist besonders bevorzugt, dass der Ferienmodus automatisch aktiviert wird, wenn über einen vorhergebaren Zeitraum, insbesondere von drei Tagen, kein Raumsolltemperaturwert zugeführt wird. Damit ergibt sich eine automatische Energieeinsparung, indem eine Nichtnutzung des Raumes erkannt wird und so z.B. eine Absenkung der Raumtemperatur erfolgt.

Die Erfindung wird durch eine Raumtemperaturregeleinheit mit einem Steuerungsmodul zur Durchführung des Verfahrens nach einem der Ansprüche 1 bis 9 dadurch gelöst, dass das Steuerungsmodul eine Recheneinheit mit einem Speicher für zugeführte Raumsolltemperaturwerte und einen aus dem ermittelten Verlauf von Raumsolltemperaturwerten umfasst. Die Raumtemperaturregeleinheit weist dabei insbesondere eine Schnittstelle zur Eingabe von Raumsolltemperaturwerten auf, beispielsweise ein Tastenfeld, ein Display und/oder einen entsprechenden Eingabe-Port, wie eine Netzwerkverbindung. Diese kann gegebenenfalls schnurlos ausgebildet sein. Die Erfindung wird im Folgenden anhand eines bevorzugten Ausführungsbeispiels näher beschrieben.

Das Steuermodul der Raumtemperaturregeleinheit zur Durchführung des erfindungsgemäßen Verfahrens weist einen selbstlernenden Algorithmus auf, der aus den vom Benutzer vorgegebenen Raumsolltemperaturwerten zumindest für jeden Wochentag einen optimalen Verlauf der Raumsolltemperaturwerte ermittelt und dann die Raumtemperatur auf dieser Grundlage regelt. Raumsolltemperaturwerte können von unterschiedlichen Quellen zugeführt werden, beispielsweise direkt eingegeben werden, mittels App über ein mobiles Telefon oder aus dem Internet zugeführt werden. Für den Algorithmus selbst ist die Herkunft der Raumsolltemperaturwerte unwichtig, vielmehr kann er am Ende eines Tages ein Muster über den Tagesverlauf erkennen und daraus einen zeitabhängigen Verlauf der Raumsolltemperaturwerte berechnen. Beispielsweise werden dabei über 12 Wochen, also 84 Tage, die zeitabhängigen Verläufe der Raumsolltemperaturwerte gespeichert. Dabei werden nicht einfache Umschaltpunkte hinterlegt, sondern echte Raumsolltemperaturwerte, wobei beispielsweise bei einer Auflösung von 10 Minuten, 144 Raumsolltemperaturwerte pro Tag einen Verlauf bilden. Dabei erfolgt eine ständige Aktualisierung dieser Verläufe, es handelt sich also um einen selbstlernenden Prozess.

Wenn beispielsweise ein Benutzer einen neuen Raumsolltemperaturwert vorgibt, beispielsweise über eine App, wird dies erfasst und bei der Aktualisierung des Verlaufs berücksichtigt. Dies erfolgt selbst dann, wenn die Raumtemperaturregeleinheit in einen manuellen Modus oder im Ausweichmodus betrieben wird. Dadurch steht, sobald ein Umschalten in den Modus mit dem selbstlernenden Verlauf der Raumsolltemperaturwerte erfolgt, immer ein aktueller Verlauf zur Verfügung.

Ein neues Muster erstreckt sich dabei über eine Woche, sodass alle Verläufe nach Ablauf einer Woche wiederum aktualisiert sind. In einer Anlernphase kann auch vorgesehen sein, zunächst von den gleichen Verläufen an jedem Tag auszugehen, die sich dann nach und nach tageweise individualisieren.

Es ist auch denkbar, Muster für zwei oder drei Wochen anzulegen. Dies ist insbesondere dann nützlich, wenn eine entsprechende periodische Nutzung der Räumlichkeiten erfolgt. Dabei kann eine automatische Ermittlung dieser Muster beziehungsweise der Zeiträume vorgenommen werden, z.B. auf Grundlage einer Standardabweichung zwischen zeitgleichen Raumsolltemperaturwerten an unterschiedlichen Tagen oder Wochen. Wenn beispielsweise eine Standardabweichung zwischen den zeitabhängigen Raumsolltemperaturwerten zwischen geradzahligen Wochen beziehungsweise zwischen ungeradzahligen Wochen kleiner ist als zwischen aufeinanderfolgenden Wochen, kann davon ausgegangen werden, dass sich alle zwei Wochen ein Muster wiederholt.

Dabei kann eine Gewichtung und Filterung der zugeführten Raumsolltemperaturwerte erfolgen. Beispielsweise kann ein zuletzt zugeführter Raumsolltemperaturwert stärker gewichtet werden, als ein vor einem längeren Zeitraum zugeführter Raumsolltemperaturwert. Stark voneinander abweichende Eingaben von Raumtemperatursollwerten können zusätzlich, beispielsweise auf Grundlage der Standardabweichung, herausgefiltert werden, sodass diese keinen direkten Einfluss auf den gelernten Verlauf nehmen. Dabei werden diese Ausreißer aber nicht verworfen, da sich auch daraus noch ein Muster ergeben kann, was dann wiederum im zeitabhängigen Verlauf der Raumsolltemperaturwerte berücksichtigt werden muss.

Das erfindungsgemäße Verfahren beziehungsweise die erfindungsgemäße Raumtemperaturregeleinheit ermöglicht eine automatische Anpassung des Verlaufs der Raumsolltemperaturwerte an die Anforderungen des Benutzers bzw. Bewohners. Dabei ist keine aufwendige Programmierung der Raumtemperaturregeleinheit durch den Benutzer erforderlich, vielmehr lernt diese automatisch durch die manuellen Raumsolltemperaturwerte, die der Benutzer tagsüber eingibt. Da es sich dabei um ein selbstlernendes System handelt, steigert sich mit zunehmender Nutzungsdauer, sowohl der Bedienkomfort als auch die Effizienz, da unnötiges Aufwärmen ebenso vermieden wird, wie zu niedrige Temperaturen. Dabei ergibt sich eine automatische Anpassung an Änderungen der Umgebungsbedingungen, beispielsweise an ein geändertes Benutzerverhalten oder eine Änderung der Jahreszeiten.

Insgesamt ermöglicht die erfindungsgemäße Raumtemperaturregeleinheit bzw. das erfindungsgemäße Verfahren eine sehr komfortable, bedienerfreundliche und energieeffiziente Raumtemperaturregelung.

## Patentansprüche

1. Verfahren zur Raumtemperaturregelung mit einem Steuerungsmodul zur Regelung mindestens einer Raumtemperatur, **dadurch gekennzeichnet, dass** das Steuerungsmodul einen zeitabhängigen Verlauf der Raumsolltemperaturwerte anhand zugeführter Raumsolltemperaturwerte erlernt und der weiteren Regelung zugrunde legt, wobei der Verlauf durch neu zugeführte Raumsolltemperaturwerte aktualisiert wird.

2. Verfahren nach Anspruch 1, **dadurch gekennzeichnet, dass** die Raumsolltemperaturwerte bei der Erlernung des Verlaufs gefiltert und/oder gewichtet werden.

3. Verfahren nach Anspruch 1 oder 2, **dadurch gekennzeichnet, dass** im Verlauf Raumsolltemperaturwerte in Abständen zwischen 5 und 30 min hinterlegt werden.

4. Verfahren nach einem der vorhergehenden Ansprüche, **dadurch gekennzeichnet, dass** das Steuerungsmodul die Raumtemperatur in einem Ausweichmodus zeitabhängig anhand hinterlegter Raumsolltemperaturwerte regelt.

5. Verfahren nach Anspruch 4, **dadurch gekennzeichnet, dass** die für den Ausweichmodus hinterlegten Raumsolltemperaturwerte bei der Berechnung des Verlaufs berücksichtigt werden.

6. Verfahren nach einem der vorhergehenden Ansprüche, **dadurch gekennzeichnet, dass** der Verlauf der Raumsolltemperaturwerte für einzelne Wochentage bestimmt und gespeichert wird.

7. Verfahren nach einem der vorhergehenden Ansprüche, **dadurch gekennzeichnet, dass** ein wiederkehrendes Muster jeweils für eine oder mehrere Wochen erstellt wird.

8. Verfahren nach einem der vorhergehenden Ansprüche, **dadurch gekennzeichnet, dass** das Steuerungsmodul einen Ferienmodus umfasst, für den insbesondere separate Raumsolltemperaturwerte hinterlegt sind, wobei im Ferienmodus zugeführte Raumsolltemperaturwerte den berechneten Verlauf nicht beeinflussen.

9. Verfahren nach Anspruch 8, **dadurch gekennzeichnet, dass** der Ferienmodus automatisch aktiviert wird, wenn über einen vorgebbaren Zeitraum, insbesondere von drei Tagen, kein Raumsolltemperaturwert zugeführt wird.

10. Raumtemperaturregeleinheit mit einem Steuerungsmodul zur Durchführung des Verfahrens nach einem der oben genannten Ansprüche, **dadurch gekennzeichnet, dass** das Steuerungsmodul eine Recheneinheit mit einem Speicher für zugeführte Raumsolltemperaturwerte und einen daraus ermittelten Verlauf von Raumsolltemperaturwerten umfasst.
